(19) Europäisches Patentamt
European Patent Office
Office européen des brevets

(11) **EP 1 981 926 B1**

(12) **EUROPÄISCHE PATENTSCHRIFT**

(45) Veröffentlichungstag und Bekanntmachung des Hinweises auf die Patenterteilung:
**27.05.2009 Patentblatt 2009/22**

(21) Anmeldenummer: **07703882.6**

(22) Anmeldetag: **16.01.2007**

(51) Int Cl.:
*C08G 18/36* (2006.01)

(86) Internationale Anmeldenummer:
**PCT/EP2007/050367**

(87) Internationale Veröffentlichungsnummer:
**WO 2007/085548 (02.08.2007 Gazette 2007/31)**

(54) **VERFAHREN ZUR HERSTELLUNG VON OFFENZELLIGEN VISKOELASTISCHEN POLYURETHAN-WEICHSCHAUMSTOFFEN**

METHOD FOR THE PRODUCTION OF OPEN-CELL VISCOELASTIC SOFT POLYURETHANE FOAMS

PROCÉDÉ DE FABRICATION DE MOUSSES SOUPLES DE POLYURÉTHANNE VISCOÉLASTIQUES À PORES OUVERTS

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **27.01.2006 EP 06100959**

(43) Veröffentlichungstag der Anmeldung:
**22.10.2008 Patentblatt 2008/43**

(73) Patentinhaber: **BASF SE**
**67056 Ludwigshafen (DE)**

(72) Erfinder:
• **BAUER, Stephan**
  **49179 Ostercappeln (DE)**
• **MEYER, Stefan**
  **49661 Cloppenburg (DE)**

(56) Entgegenhaltungen:
WO-A-03/046041          DE-A1- 19 924 802
US-A1- 2005 070 620     US-A1- 2005 210 595

**Beschreibung**

Gegenstand der Erfindung ist ein Verfahren zur Herstellung von viskoelastischen Polyurethan-Weichschaumstoffen unter Verwendung von Polyetheralkoholen auf Basis nachwachsender Rohstoffe, insbesondere Rizinusöl.

Polyurethan-Weichschaumstoffe werden in vielen technischen Gebieten, insbesondere zur Polsterung oder Geräuschdämmung, eingesetzt. Ihre Herstellung erfolgt üblicherweise durch Umsetzung von Polyisocyanaten mit Verbindungen mit mindestens zwei mit Isocyanatgruppen reaktiven Wasserstoffatomen in Gegenwart von Treibmitteln sowie gegebenenfalls Katalysatoren und üblichen Hilfs- und/oder Zusatzstoffen.

Der Markt verlangt aus ökologischen Gründen zunehmend nach Schaumstoffen, die nachwachsende Rohstoffe enthalten. Nachwachsende Rohstoffe können bei der Herstellung von Polyurethanen perspektivisch auch eine Alternative zu petrochemisch hergestellten Ausgangsprodukten sein. Die Schaumstoffe werden zumeist hergestellt durch Verwendung von Hydroxylgruppen enthaltenden Naturstoffen oder Polyolen, die hergestellt werden durch Anlagerung von Alkylenoxiden an diese Verbindungen.

Beispiele für Verbindungen aus nachwachsenden Rohstoffen sind Rizinusöl, Polyhydroxyfettsäure, Rizinolsäure, mit Hydroxylgruppen modifizierte Öle wie Traubenkernöl, Schwarzkümmelöl, Kürbiskernöl, Borretschsamenöl, Sojaöl, Weizenkeimöl, Rapsöl, Sonnenblumenöl, Erdnussöl, Aprikosenkernöl, Pistazienkernöl, Mandelöl, Olivenöl, Macadamianussöl, Avocadoöl, Sanddornöl, Sesamöl, Hanföl, Haselnussöl, Nachtkerzenöl, Wildrosenöl, Hanföl, Distelöl, Walnussöl, mit Hydroxylgruppen modifizierte Fettsäuren und Fettsäureester auf Basis von Myristoleinsäure, Palmitoleinsäure, Ölsäure, Vaccensäure, Petroselinsäure, Gadoleinsäure, Erucasäure, Nervonsäure, Linolsäure, - und -Linolensäure, Stearidonsäure, Arachidonsäure, Timnodonsäure, Clupanodonsäure, Cervonsäure. Die größte technische Bedeutung hat hierbei Rizinusöl und hydriertes Rizinusöl.

Die Umsetzung der Verbindungen aus nachwachsenden Rohstoffen mit den Alkylenoxiden kann hierbei auf übliche und bekannte Art erfolgen.

Aus WO 00/44813 ist die Herstellung von Polyetheralkoholen durch Alkoxylierung von Rizinusöl unter Verwendung von Multimetallcyanidverbindungen, häufig auch als DMC-Katalysatoren bezeichnet bekannt.

Aus WO 04/20497 ist es bekannt, Polyetheralkohole, die durch Anlagerung von Alkylenoxiden an Naturstoffe, insbesondere Rizinusöl, hergestellt wurden, zur Herstellung von Polyurethan-Weichschaumstoffen mit verringertem Fogging einzusetzen. Derartige Schaumstoffe finden insbesondere bei der Inneneinrichtung von Kraftfahrzeugen Verwendung.

Eine besondere Stoffklasse innerhalb der Polyurethan-Weichschaumstoffe stellen die viskoelastischen Schaumstoffe dar.

Im Rahmen dieser Erfindung wird ein Schaumstoff als viskoelastisch bezeichnet, wenn er im Torsionsschwingungsversuch nach DIN 53445 einen Verlustfaktor von mehr als 0,15, bevorzugt mehr als 0,2 aufweist. Ferner ist bevorzugt, dass die erfindungsgemäßen Schaumstoffe über einen breiten Temperaturbereich, d.h. von -20°C bis +50°C, zumindest aber von 0 bis +40°C, ein viskoelastisches Verhalten zeigen.

Ebenfalls kann der Schaumstoff als viskoelastisch bezeichnet werden, wenn er eine Rückprallelastizität, gemessen nach DIN EN ISO 8307, von weniger als 30 %, bevorzugt von 2 bis 25 %, besonders bevorzugt von 3 bis 20 % aufweist.

Insbesondere ist es bevorzugt, dass der erfindungsgemäße Schaumstoff sowohl die vorstehend angegebenen Kriterien für den Verlustfaktor als auch für die Rückprallelastizität erfüllt.

Bei den erfindungsgemäßen viskoelastischen Schaumstoffen mit vorstehend beschriebenen Dämpfungskoeffizienten handelt es sich um sogenannte "müde" Schaumstoffe.

Derartige Schaumstoffe werden insbesondere zur Schalldämmung sowie zur Herstellung von Matratzen oder Kissen eingesetzt. Bei diesen Anwendungen ist es auch wichtig, dass die Schaumstoffe eine gute Alterungsbeständigkeit, insbesondere bei der Feuchtwärmelagerung, aufweisen. Weiterhin sollte die Rückspaltung der Urethanbindungen, die zur Bildung von aromatischen Aminen führen kann, deutlich unterdrückt werden.

Aufgabe der vorliegenden Erfindung ist es demzufolge, viskoelastische Polyurethan-Weichschaumstoffe bereitzustellen, die auf Basis von nachwachsenden Rohstoffen hergestellt werden, gute mechanische Eigenschaften, einen geringen Geruch und geringe Emissionen aufweisen und eine gute Langzeitstabilität, insbesondere bei der Feuchtwärmelagerung, besitzen.

Die Aufgabe konnte überraschenderweise gelöst werden, indem bei der Herstellung der Polyurethan-Weichschaumstoffe mindestens zwei Polyole auf Basis von nachwachsenden Rohstoffen mit unterschiedlichen Hydroxylzahlen eingesetzt werden.

Gegenstand der vorliegenden Erfindung ist somit ein Verfahren zur Herstellung von viskoelastischen Polyurethan-Weichschaumstoffen auf der Basis von nachwachsenden Rohstoffen durch Umsetzung von

    a) Polyisocyanaten mit

b) Verbindungen mit gegenüber Isocyanatgruppen reaktiven Wasserstoffatomen, enthalten

bi) Verbindungen mit mindestens zwei mit Isocyanatgruppen reaktiven Wasserstoffatomen und einer OH-Zahl von 20 bis 100 mgKOH/g und

bii) Verbindungen mit mindestens zwei mit Isocyanatgruppen reaktiven Wasserstoffatomen und einer OH-Zahl von 100 bis 800 mgKOH/g und

biii) Verbindungen mit mindestens einer und höchstens zwei mit Isocyanatgruppen reaktiven Wasserstoffatomen und einer OHZ von 100 bis 800 mgKOH/g und

c) Treibmitteln

dadurch gekennzeichnet, dass die Komponenten bi) und bii) jeweils mindestens eine Verbindung enthalten, die nachwachende Rohstoffe oder deren Umsetzungsprodukte enthält.

Gegenstand der Gegenstand der Anmeldung sind weiterhin die nach diesem Verfahren hergestellten viskoelasischen Polyurethan-Weichschaumstoffe.

Gegenstand der Erfindung ist weiterhin die Verwendung der erfindungsgemäßen offenzelligen viskoelastischen Polyurethan-Weichschaumstoffe für die Herstellung von Möbeln und Matratzen und in Automobilinnenräumen, insbesondere zur Hinterschäumung von Autoteppichen.

Der Anteil an nachwachsenden Rohstoffen im Schaum beträgt vorzugsweise mindertens 20, besonders bevorzugt über 30, und insbesondere über 40 Gew.-%.

Dabei können die Komponenten bi) und bii) auch ausschließlich aus Verbindungen aus nachwachsenden Rohstoffen bestehen.

Bevorzugt besteht die Komponente b) zu 5-45 Gew.-%, insbesondere 10-25 Gew.-% aus bi), zu 30-90 Gew.-%, insbesondere 50-80 Gew.-% aus bii) und zu 5-40 Gew.-%, insbesondere 10-30 Gew.-% aus biii), wobei die Prozentangaben sich auf die Summe aus bi), bii) und biii) beziehen.

Als Verbindungen aus nachwachsenden Rohstoffen werden insbesondere die oben beschriebenen nachwachsenden oder modifizierten nachwachsende Rohstoffe verwendet, wie Öle, Fettsäuren und Fettsäureester, die mindestens eine mittlere OH-Funktionalität von 2 bis 16, bevorzugt 2 bis 8 und ganz bevorzugt 2 bis 4 aufweisen.

Die Verbindungen aus nachwachsenden Rohstoffen werden vorzugsweise ausgewählt aus der Gruppe, enthaltend Rizinusöl, Polyhydroxyfettsäure, Rizinolsäure, hydroxygruppen-modifizierten Ölen wie Traubenkernöl, Schwarzkümmelöl, Kürbiskernöl, Borretschsamenöl, Sojaöl, Weizenkeimöl, Rapsöl, Sonnenblumenöl, Erdnussöl, Aprikosenkernöl, Pistazienkernöl, Mandelöl, Olivenöl, Macadamianussöl, Avocadoöl, Sanddornöl, Sesamöl, Hanföl, Haselnussöl, Nachtkerzenöl, Wildrosenöl, Hanföl, Distelöl, Walnussöl, sowie mit Hydroxylgruppen modifizierten Fettsäuren und Fettsäureestern auf Basis von Myristoleinsäure, Palmitoleinsäure, Ölsäure, Vaccensäure, Petroselinsäure, Gadoleinsäure, Erucasäure, Nervonsäure, Linolsäure, $\alpha$- und $\gamma$-Linolensäure, Stearidonsäure, Arachidonsäure, Timnodonsäure, Clupanodonsäure, Cervonsäure.

Handelsprodukte der chemisch mit Hydroxylgruppen modifizierten Verbindungen sind beispielsweise Merginat® PV 204, 206 und 235, oder die Polyhydroxyfettsäure PHF 110 der Harburger Fettchemie.

Vorzugsweise wird als Verbindung aus nachwachsenden Rohstoffen Rizinusöl und/oder hydriertes Rizinusöl eingesetzt.

Die Umsetzung der Verbindungen aus nachwachsenden Rohstoffen mit den Alkylenoxiden kann auf übliche und bekannte Art erfolgen. Zumeist wird die Ausgangsverbindung mit einem Katalysator vermischt und diese Mischung mit Alkylenoxiden umgesetzt. Die Anlagerung der Alkylenoxide erfolgt zumeist bei den üblichen Bedingungen, bei Temperaturen im Bereich von 60 bis 180°C, bevorzugt zwischen 90 bis 140°C, insbesondere zwischen 100 bis 130°C und Drücken im Bereich von 0 bis 20 bar, bevorzugt im Bereich von 0 bis 10 bar und insbesondere im Bereich von 0 bis 5 bar. Als Alkylenoxide werden vorzugsweise Ethylenoxid, Propylenoxid oder beliebige Mischungen dieser Verbindungen eingesetzt.

Als Katalysatoren werden vorzugsweise basische Verbindungen eingesetzt, wobei das Kaliumhydroxid die größte technische Bedeutung hat. Darüber finden Multimetallcyanidverbindungen, häufig auch als DMC-Katalysatoren bezeichnet Verwendung als Katalysator, wie beispielsweise in EP 654 302, EP 862 947, WO 99/16775, WO 00/74845, WO 00/74843 und WO 00/74844 beschrieben.

Als Alkylenoxide können alle bekannten Alkylenoxide verwendet werden, beispielsweise Ethylenoxid, Propylenoxid, Butylenoxid, Styroloxid. Insbesondere werden als Alkylenoxide Ethylenoxid, Propylenoxid und Mischungen aus den genannten Verbindungen eingesetzt.

Aus DE 10240186 ist es bekannt, das Multimetallcyanidverbindungen, häufig auch als DMC-Katalysatoren bezeichnet, sich besonders eignen zur Alkoxylierung von nachwachsenden Rohstoffen, wie Ricinusöl. Diese so hergestellten Polyole weisen vorzugsweise einen Gehalt an zyklischen Fettsäureestern von maximal 10 ppm auf und zeichnen sich daher durch ihr sehr niedriges Emissionsverhalten aus

Die Verbindungen bi) haben bevorzugt eine Hydroxylzahl von 20 bis 100 mg/KOH bei einer Viskosität im Bereich von 400 bis 6000 mPa·s. Bevorzugt werden Polyetherole auf Basis von Ricinusöl mit einer Hydroxylzahl von 30 bis 80, bevorzugt 45 bis 60 mgKOH/g eingesetzt. Diese weisen bevorzugt einen Gehalt an primären Hydroxylgruppen von kleiner 10, bevorzugt kleiner 5 Gew.-%, bezogen auf das Gewicht des Polyetheralkohols, auf. Insbesondere erfolgt die Anlagerung der Alkylenoxide mittels DMC-Katalyse.

Die Verbindungen bii) haben bevorzugt eine Hydroxylzahl von 100 bis 800 mg/KOH. Als Verbindungen aus nachwachsenden Rohstoffen werden insbesondere die oben beschriebenen nachwachsenden oder modifizierten nachwachsende Rohstoffe verwendet, wie Öle, Fettsäuren und Fettsäureestern. Gegebenfalls können diese mit den Alkylenoxiden wie Ethylenoxid, Propylenoxid oder beliebige Mischungen dieser Verbindungen unter Verwendung von geeigneten Katalysatoren umgesetzt werden. Als Verbindung bii) wird ganz bevorzugt Ricinusöl eingesetzt.

Die Komponenten bi) und bii) können neben den Verbindung aus nachwachsenden Rohstoffen gegebenenfalls weitere Polyole, insbesondere Polyetheralkohole, die nach bekannten Verfahren, zumeist durch katalytische Anlagerung von Alkylenoxiden, insbesondere Ethylenoxid und/oder Propylenoxid, an H-funktionelle Startsubstanzen, oder durch Kondensation von Tetrahydrofuran, hergestellt werden. Als H-funktionelle Startsubstanzen kommen insbesondere mehrfunktionelle Alkohole und/oder Amine zum Einsatz. Bevorzugt eingesetzt werden Wasser, zweiwertige Alkohole, beispielsweise Ethylenglykol, Propylenglykol, oder Butandiole, dreiwertige Alkohole, beispielsweise Glycerin oder Trimethylolpropan, sowie höherwertige Alkohole, wie Pentaerythrit, Zuckeralkohole, beispielsweise Sucrose, Glucose oder Sorbit. Bevorzugt eingesetzte Amine sind aliphatische Amine mit bis zu 10 Kohlenstoffatomen, beispielsweise Ethylendiamin, Diethylentriamin, Propylendiamin, sowie Aminoalkohole, wie Ethanolamin oder Diethanolamin. Als Alkylenoxide werden vorzugsweise Ethylenoxid und/oder Propylenoxid eingesetzt, wobei bei Polyetheralkoholen, die für die Herstellung von Polyurethan-Weichschäumen verwendet werden, häufig am Kettenende ein Ethylenoxidblock angelagert wird. Als Katalysatoren bei der Anlagerung der Alkylenoxide kommen insbesondere basische Verbindungen zum Einsatz, wobei hier das Kaliumhydroxid die größte technische Bedeutung hat. Wenn der Gehalt an ungesättigten Bestandteilen in den Polyetheralkoholen gering sein soll, können als Katalysatoren zur Herstellung dieser Polyetheralkohole auch DMC-Katalysatoren zum Einsatz kommen.

Für bestimmte Einsatzgebiete, insbesondere zur Erhöhung der Härte der Polyurethan-Weichschaumstoffe, können auch sogenannte polymermodifizierte Polyole mitverwendet werden. Derartige Polyole können beispielsweise durch in-situ Polymerisation von ethylenisch ungesättigten Monomeren, vorzugsweise Styrol und/oder Acrylnitril, in Polyetheralkoholen hergestellt werden. Zu den polymermodifzierten Polyetheralkoholen gehören auch Polyharnstoffdispersionen enthaltende Polyetheralkohole, die vorzugsweise durch Umsetzung von Aminen mit Isocyanaten in Polyolen, hergestellt werden.

Als Verbindung biii) eignen sich Monole und Diole mit einer Hydroxylgruppenzahl von 100 bis 800 mgKOH/g. Besonders bevorzugt werden Polyalkylenglykole, Benzylalkohol, C4 bis C18-Monoalkohole, C8 bis C18-Oxoalkohoethoxylate, wie die Lutensol® A..N, AO, AP, AT, F, ON, TO, XL, XP, AP-Marken der BASF AG, Ganz besonders werden Polypropylenoxide, wie Lupranol 1000, 1100 und 1200, sowie Monole wie Lutensol® A4N, AO3 ON 30, ON 40, TO2, TO3, XA 30, XA 40, XP 30, XP 40, XL 40 und Benzylalkohol verwendet.

Die Herstellung der erfindungsgemäßen viskoelastischen Polyurethan-Weichschaumstoffe kann nach üblichen und bekannten Verfahren erfolgen.

Zu den für das erfindungsgemäße Verfahren eingesetzten Ausgangsverbindungen ist im einzelnen folgendes zu sagen:

Als Polyisocyanate a) können für das erfindungsgemäße Verfahren alle Isocyanate mit zwei oder mehr Isocyanatgruppen im Molekül zum Einsatz kommen. Dabei können sowohl aliphatische Isocyanate, wie Hexamethylendiisocyanat (HDI) oder Isophorondiisocyanat (IPDI), oder vorzugsweise aromatische Isocyanate, wie Toluylendiisocyanat (TDI), Diphenylmethandiisocyanat (MDI) oder Mischungen aus Diphenylmethandiisocyanat und Polymethylenpolyphenylenpolyisocyanaten (Roh-MDI), vorzugsweise TDI und MDI, besonders bevorzugt TDI, verwendet werden. Ganz besonders bevorzugt ist eine Mischung aus 80 Gew.-%. 2,4- und 20 Gew.-% 2,6-Toluylendiisocyanat. Es ist auch möglich, Isocyanate einzusetzen, die durch den Einbau von Urethan-, Uretdion-, Isocyanurat-, Allophanat-, Uretonimin- und anderen Gruppen modifiziert wurden, sogenannte modifizierte Isocyanate. Bevorzugte Prepolymere sind MDI-Prepolymere mit einem NCO-Gehalt zwischen 20 und 35 % bzw. deren Mischungen mit Polymethylenpolyphenylenpolyisocyanaten (Roh-MDI).

Die erfindungsgemäß eingesetzten Polyetheralkohole bi), bii) und biii) können allein oder in Kombination mit anderen Verbindungen mit mindestens zwei mit Isocyanatgruppen reaktiven Wasserstoffatomen eingesetzt werden.

Als Verbindungen mit mindestens zwei aktiven Wasserstoffatomen b), die zusammen mit den erfindungsgemäß eingesetzten Polyetheralkoholen bi), bii) und biii) eingesetzt werden können, kommen insbesondere Polyesteralkohole und vorzugsweise Polyetheralkohole mit einer Funktionalität von 2 bis 16, insbesondere von 2 bis 8, vorzugsweise von 2 bis 4 und einem mittleren Molekulargewicht Mw im Bereich von 400 bis 20000 g/mol, vorzugsweise 1000 bis 8000 g/mol, in Betracht.

Zu den Verbindungen mit mindestens zwei aktiven Wasserstoffatomen b) gehören auch die Kettenverlängerungs- und Vernetzungsmittel. Als Kettenverlängerungs- und Vernetzungsmittel werden vorzugsweise 2- und 3-funktionelle Alkohole mit Molekulargewichten von 62 bis 800 g/mol, insbesondere im Bereich von 60 bis 200 g/mol, verwendet. Beispiele sind Ethylenglykol, Propylenglykol, Diethylenglykol, Triethylenglykol, Dipropylenglykol, Tripropylenglykol, niedermolekulare Polypropylen- und Polyethylenoxide, wie Lupranol® 1200, Butandiol-1,4, Glycerin oder Trimethylolpropan. Als Vernetzungsmittel können auch Diamine, Sorbit, Glycerin, Alkonolamine eingesetzt werden. Falls Kettenverlängerungs- und Vernetzungsmittel eingesetzt werden, beträgt deren Menge vorzugsweise bis zu 5 Gew.-%, bezogen auf das Gewicht der Verbindungen mit mindestens zwei aktiven Wasserstoffatomen.

Das erfindungsgemäße Verfahren erfolgt zumeist in Anwesenheit von Aktivatoren, beispielsweise tertiären Aminen oder organischen Metallverbindungen, insbesondere Zinnverbindungen. Als Zinnverbindungen werden bevorzugt zweiwertige Zinnsalze von Fettsäuren wie Zinndioktoat und zinnorganische Verbindungen wie Dibutylzinndilaurat verwendet.

Als Treibmittel c) zur Herstellung der Polyurethan-Schaumstoffe wird bevorzugt Wasser eingesetzt, das mit den Isocyanatgruppen unter Freisetzung von Kohlendioxid reagiert. Bevorzugt wird Wasser in einer Menge von 0,5 bis 6 Gew.-%, besonders bevorzugt in einer Menge von 1,5 bis 5,0 Gew.-%, bezogen auf das Gewicht der Komponente b), verwendet. Gemeinsam mit oder an Stelle von Wasser können auch physikalisch wirkende Treibmittel, beispielsweise Kohlendioxid, Kohlenwasserstoffe, wie n-, iso- oder Cyclopentan, Cyclohexan oder halogenierte Kohlenwasserstoffe, wie Tetrafluorethan, Pentafluorpropan, Heptafluorpropan, Pentafluorbutan, Hexafluorbutan oder Dichlormonofluorethan, eingesetzt werden. Die Menge des physikalischen Treibmittels liegt dabei vorzugsweise im Bereich zwischen 1 bis 15 Gew.-%, insbesondere 1 bis 10 Gew.-%, die Menge an Wasser vorzugsweise im Bereich zwischen 0,5 bis 10 Gew.-%, insbesondere 1 bis 5 Gew.-%. Kohlendioxid wird bevorzugt als physikalisches Treibmittel eingesetzt, besonders bevorzugt in Kombination mit Wasser.

Zur Herstellung der erfindungsgemäßen Polyurethan-Weichschaumstoffe können üblicherweise auch Stabilisatoren sowie Hilfs- und/oder Zusatzstoffe eingesetzt werden.

Als Stabilisatoren kommen vor allem Polyethersiloxane, bevorzugt wasserlösliche Polyethersiloxane, in Frage. Diese Verbindungen sind im allgemeinen so aufgebaut, dass ein langkettiges Copolymerisat aus Ethylen- und Propylenoxid mit einem Polydimethylsiloxanrest verbunden ist. Weitere Schaumstabilisatoren sind in US-A-2,834,748, 2 917 480 sowie in US-A-3,629,308 beschrieben

Die Umsetzung erfolgt gegebenenfalls in Anwesenheit von Hilfs- und/oder Zusatzstoffen wie Füllstoffen, Zellreglern, oberflächenaktiven Verbindungen und/oder Flammschutzmitteln. Bevorzugte Flammschutzmittel sind flüssige Flammschutzmittel auf Halogen-Phosphor-Basis wie Trichlorpropylphosphat, Trichlorethylphosphat und halogenfreie Flammschutzmittel wie Exolit® OP 560 (Clariant International Ltd).

Weitere Angaben zu den verwendeten Ausgangsstoffen, Katalysatoren sowie Hilfs- und Zusatzstoffen finden sich beispielsweise im Kunststoff-Handbuch, Band 7, Polyurethane, Carl-Hanser-Verlag München, 1. Auflage 1966, 2. Auflage, 1983 und 3. Auflage, 1993.

Zur Herstellung der erfindungsgemäßen Polyurethane werden die organischen Polyisocyanate mit den Verbindungen mit mindestens zwei aktiven Wasserstoffatomen im Beisein der genannten Treibmittel, sowie gegebenenfalls der Katalysatoren und Hilfs- und/oder Zusatzstoffe zur Reaktion gebracht.

Bei der Herstellung der erfindungsgemäßen Polyurethane werden das Isocyanat und die Polyolkomponente zumeist in einer solchen Menge zusammengebracht, dass das Äquivalenzverhältnis von Isocyanatgruppen zur Summe der aktiven Wasserstoffatome 0,7 bis 1,25, vorzugsweise 0,8 bis 1,2 beträgt.

Die Herstellung der Polyurethan-Schaumstoffe erfolgt vorzugsweise nach dem oneshot-Verfahren, beispielsweise mit Hilfe der Hochdruck- oder Niederdrucktechnik. Die Schaumstoffe können in offenen oder geschlossenen metallischen Formwerkzeugen oder durch das kontinuierliche Auftragen des Reaktionsgemisches auf Bandstraßen zur Erzeugung von Schaumblöcken hergestellt werden.

Besonders vorteilhaft für die Herstellung von Formweichschaumstoffen ist es, nach dem sogenannten Zweikomponentenverfahren zu arbeiten, bei dem eine Polyol- und eine Isocyanatkomponente hergestellt und verschäumt werden. Die Komponenten werden vorzugsweise bei einer Temperatur im Bereich zwischen 15 bis 90°C, vorzugsweise 20 bis 60°C und besonders bevorzugt 20 bis 35°C vermischt und in das Formwerkzeug beziehungsweise auf die Bandstraße gebracht. Die Temperatur im Formwerkzeug liegt zumeist im Bereich zwischen 20 und 110°C, vorzugsweise 30 bis 60°C und besonders bevorzugt 35 bis 55°C.

Blockweichschaumstoffe können in diskontinuierlichen oder kontinuierlichen Anlagen, wie beispielweise nach dem Planiblock-, dem Maxfoam-, dem Draka-Petzetakis und dem Vertifoam-Verfahren verschäumt werden.

Die Polyurethan-Weichschaumstoffe, zu deren Herstellung Polyetheralkohole aus nachwachsenden Rohstoffen, die mittels DMC-Katalyse hergestellt wurden, eingesetzt werden, zeichnen sich gegenüber Produkten, bei denen die erfindungsgemäß eingesetzten Polyetheralkohole aus nachwachsenden Rohstoffen mittels basischer Katalysatoren hergestellt wurden, durch einen deutlich verringerten Geruch, deutlich verringerte Werte für das Fogging sowie eine signifikant verringerte Rissbildung, sowie einen verbesserten Druckverformungsrest vor und nach Alterung aus. Weiterhin weisen die erfindungsgemäßen Schaumstoffe eine höhere Offenzelligkeit auf, was sich beispielsweise in einer erhöhten Luftdurchlässigkeit zeigt.

Der Druckverformungsrest der Polyurethan-Blockweichschaumstoffe beträgt maximal 10 %, nach Alterung, gemäß DIN EN ISO 2440, maximal 20 %.

Die Luftdurchlässigkeit der erfindungsgemäßen viskoelastischen Polyurethan-Weichschaumstoffe beträgt vorzugsweise mindestens 10 $dm^3$/min, besonders bevorzugt größer 30, und insbesondere größer 50 $dm^3$/min.

Die erfindungsgemäßen viskoelastischen Polyurethan-Weichschaumstoffe besitzen eine sehr gute Alterungsbeständigkeit, insbesondere auch unter Feucht-Wärmebedingungen. Sie sind hydrophob und quellbeständig. Der Anteil an aromatischen Aminen, insbesondere 2,4 und 2,6-Toluoldiamin oder MDA im Schaumstoff ist kleiner als 1 ppm und erhöht sich auch nach langer Gebrauchsdauer nicht.

Die Verwendung der erfindungsgemäßen Polyurethan-Weichschaumstoffe erfolgt vorzugsweise in Krafttahrzeuginnenräumen sowie in Möbeln und Matratzen.

Die Erfindung soll an den nachfolgenden Beispielen näher erläutert werden.

Herstellung der offenzelligen viscoelastischen Polyurethan-Weichschaumstoffe

Beispiele 1 bis 4

Die in Tabelle 1 genannten Ausgangsprodukte wurden in den in Tabelle 1 aufgeführten Mengenverhältnissen zur Umsetzung gebracht.

Alle Komponenten außer dem Isocyanat wurden zunächst durch intensives Mischen zu einer Polyolkomponente vereinigt. Danach wurde das Isocyanat unter Rühren hinzugegeben und die Reaktionsmischung in eine offene Form vergossen, worin sie zum Polyurethan-Schaumstoff ausschäumte. Die Kennwerte der erhaltenen Schäume sind in Tabelle 1 aufgeführt.

Die folgenden Kennwerte sind nach den genannten Normen, Arbeits- und Prüfanweisungen bestimmt worden:

| | |
|---|---|
| Raumgewicht in kg/$m^3$ | DIN EN ISO 845 |
| VOC Rizinusölsäurezyklus in ppm | PB VWL 709 |
| FOG Rizinusölsäurezyklus in ppm | PB VWL 709 |
| Luftdurchlässigkeit in $dm^3$/min | DIN EN ISO 7231 |
| Stauchhärte, 40 % Verformung in kPa | DIN EN ISO 2439 |
| Eindruckhärte, 25 % Verformung | DIN EN ISO 2439 |
| Eindruckhärte, 40 % Verformung | DIN EN ISO 2439 |
| Eindruckhärte, 65 % Verformung | DIN EN ISO 2439 |
| Dehnung in %nach | DIN EN ISO 1798 |
| Zugfestigkeit in kPa | DIN EN ISO 1798 |
| Rückprall-Elastizität in % | DIN EN ISO 8307 |
| Druckverformungsrest in % | DIN EN ISO 3386 |
| Wet-Compression-Set | Arbeitsanweisung AA U10-131-041 vom 06.02.02 |

Bestimmung erfolgte des Wet-Compression-Set nach der Arbeitsanweisung AA U10-131-041 vom 06.02.02:

Nach mittels Messschieber bzw. Messtaster wird die Höhe an einer vorher markierten Stelle der Schaum-Prüflinge der Maße 50 mm x 50 mm x 25 mm bestimmt. Anschließend werden die Prüflinge zwischen zwei Druckplatten gelegt und durch Abstandsstücke von 7,5 mm auf die Höhe mittels Einspannvorrichtung zusammen gedrückt.

Die Lagerung im Klimaschrank bei 50°C und 95 % rel. Luftfeuchtigkeit beginnt unmittelbar nach dem Einspannen. Nach 22 h werden die Schaum-Prüflinge in kürzester Zeit aus der Einspannvorrichtung entfernt und auf einer Oberfläche mit geringer Wärmeleitung (Tablett) zum entspannen im Normklima 30 min zwischengelagert. Anschließend wird die Resthöhe an der markierten Stelle mit dem gleichen Messmittel bestimmt.

Der Wet-Compression-Set bezieht sich auf die Verformung und wird wie folgt berechnet:

$$\text{Wet-Compression-Set} = h_0 - h_R * 100 / (h_0 - 7{,}5 \text{ mm}) \text{ in } \%$$

.

$h_0$ Ursprungshöhe in mm
$h_R$ Resthöhe des Prüfkörpers in mm

Tabelle 1

|  | OHZ | Bsp.1 | Bsp. 2 | Bsp. 3 | Bsp. 4 |
|---|---|---|---|---|---|
| Lurpanol® BALANCE 50 | 50 | 26 | 17 | 17 | 18 |
| Rizinusöl, Qualität DAB | 160,5 | 60 | 72 | 72 | 67 |
| Lutensol® XA 40 | 150 | 7 | 14 | 14 | 11 |
| Lupranol® 1000 | 55 | 7 | 7 | 7 | 4 |
| DABCO® B198 | 0 | 0,60 |  |  |  |
| Tegostab® BF 2270 | 0 |  | 0,60 |  | 0,60 |
| Tegostab® BF 2370 |  |  |  | 1,0 |  |
| Niax® A1 | 560 | 0,26 |  | 0,35 | 0,5 |
| Dabco® 33LV | 425,8 | 0,17 |  | 0,25 | 0,4 |
| Dabco® NE 500 | 280 |  | 0,44 |  |  |
| Dabco® NE 600 | 270 |  | 0,26 |  |  |
| Kosmos® 29 | 0 | 0,26 |  | 0,17 |  |
| Kosmos® EF |  |  | 0,26 |  |  |
| Kosmos® 54 | 314 | 0,26 | 0,26 |  |  |
| Irgastab® PUR 68 | 0 | 0,40 | 0,40 | 0,40 | 0,40 |
| Wasser (zus.) | 6233 | 1,72 | 1,72 | 1,72 | 2,00 |
| Lupranat® T 80 A - Index |  | 105 | 105 | 105 |  |
| Lupranat® M20W und Lupranat® MI - 3 :1, Index |  |  |  |  | 85 |
| Startzeit in s |  | 12 | 12 | 8 | 8 |
| Steigzeit in s |  | 180 | 180 | 120 | 170 |
| Raumgewicht in kg/m$^3$ |  | 47,4 | 47,9 | 51,8 | 52,3 |
| Stauchhärte, 25 % Verformung in kPa |  | 1,6 | 1,3 | 1,3 | 1,1 |
| Stauchhärte, 40 % Verformung in kPa |  | 2,1 | 1,7 | 1,7 | 1,15 |
| Stauchhärte, 65 % Verformung in kPa |  | 4,8 | 4,1 | 4,3 | 2,1 |
| Zugfestigkeit in kPa |  | 67 | 65 | 73 | 54 |
| Dehnung in % |  | 154 | 151 | 154 | 70 |
| Druckverformungsrest in % |  | 3,9 | 4,7 | 4,1 | 3,0 |
| Wet-Compression-Set |  | 13 | 14 | 12 | 12 |
| Rückprall-Elastizität in % |  | 14 | 8 | 8 | 7 |
| Luftdurchlässigkeit in dm$^3$/min |  | 40 | 70 | 50 | 50 |
| Biomasse in Gew.% im Schaumstoff |  | 48 | 47 | 47 | 48 |
| Feuchtwärmelagerung nach DIN EN ISO 2240, 1Zyklus 5 h, 120°C |  |  |  |  |  |
| Stauchhärte, 40 % Verformung in kPa |  | 1,4 | 1,2 |  |  |
| Zugfestigkeit in kPa |  | 56 | 60 |  |  |

(fortgesetzt)

| | OHZ | Bsp.1 | Bsp. 2 | Bsp. 3 | Bsp. 4 |
|---|---|---|---|---|---|
| Dehnung in % | | 175 | 170 | | |
| Druckverformungsrest in % | | 8,0 | 9,1 | | |
| 2,4-TDA-Gehalt in ppm | | < 1 | < 1 | < 1 | |
| 2,6-TDA-Gehalt in ppm | | < 1 | < 1 | < 1 | |
| MDA-Gehalt in ppm | | | | | < 1 |

Erläuterungen zur Tabelle Lupranol®      BALANCE 50 Polyetherol auf Basis von Ricinusöl mit einer Hydroxylzahl von 50 mgKOH/g und einer Viskosität von 725 mPa·s (BASF Akteingesellschaft), hergestellt mittels DMC-Katalyse Lupranol® 1000      Polypropylenglykol mit einer Hydroxylzahl von 55 mgKOH/g und einer Viskosität von 325 mPa·s (BASF Aktiengesellschaft) Rizinusöl, Qualität DAB      Fa. Alberdingk-Boley Lutensol® XA 40      C10-Oxoalkoholethyoxylat +4 EO Dabco® 33 LV:      1,4-Diazabicyclo-[2,2,2]-octan (33%) in Dipropylenglykol (67 %) (Air Products and Chemicals, Inc.)

Niax® A1:      Bis-(2-Dimethylaminoethyl)ether (70%) in Dipropylenglykol (30%), (Crompton Corporation) Dabco® NE 500 und 600      einbaubare Aminkatalysatoren (Fa. Air Products and Chemicals, Inc.)

Kosmos® 29:      Zinn-II-Salz der Ethylhexansäure, (Degussa AG) Kosmos® EF und 54      Einbaurere Zinn bzw. Zinkkatalysatoren (Degussa AG) Tegostab® BF 2270      Silikonstabilisatoren (Degussa AG) und BF 2370 DABCO® 198      Silikonstabilisator (Fa. Air Products and Chemicals, Inc.)

Irgastab® PUR 68      aminfreies Antioxidant der Fa. CIBA AG Lupranat® T 80. A:      2,4-/2,6-Toluylendiisocyanatgemisch im Verhältnis 80:20 (BASF Aktiengesellschaft) Lupranat® M20W      Mischung aus DiphenylmethandiisocyanatPolymethylenpolyphenylenpolyisocyanaten Lupranat® MI      1:1-Mischung aus 2,4'-Diphenylmethandiisocyanat und 4,4'- Diphenylmethandiisocyanat (BASF Aktiengesellschaft) TDA      Toluoldiamin MDA      Methylendiphenyl diamin

**Patentansprüche**

1. Verfahren zur Herstellung von offenzelligen viskoelastischen Polyurethan-Weichschaumstoffen auf der Basis von nachwachsenden Rohstoffen durch Umsetzung von

     a) Polyisocyanaten mit
     b) einer Polyolmischung bestehend aus

         bi) Verbindungen mit mindestens zwei mit Isocyanatgruppen reaktiven Wasserstoffatomen und einer OH-Zahl von 20 bis 100 mgKOH/g und
         bii) Verbindungen mit mindestens zwei mit Isocyanatgruppen reaktiven Wasserstoffatomen und einer OH-Zahl von 100 bis 800 mgKOH/g und
         biii) Verbindungen mit mindestens einer und höchstens zwei mit Isocyanatgruppen reaktiven Wasserstoffatomen und einer OHZ von 100 bis 800 mgKOH/g

     c) und Treibmitteln

**dadurch gekennzeichnet, dass** die Komponenten bi) und bii) jeweils mindestens eine Verbindung enthalten, die nachwachende Rohstoffe oder deren Umsetzungsprodukte enthält.

2. Verfahren nach Anspruch 1, **dadurch gekennzeichnet, dass** die Komponente b) zu 5-45 Gew.-% aus bi), zu 30-90 Gew.-% aus bii) und zu 5-40 Gew.-% aus biii), jeweils bezogen auf die Summe aus bi), bii) und biii), besteht.

3. Verfahren nach Anspruch 1, **dadurch gekennzeichnet, dass** als Komponente bi) Umsetzungsprodukte aus Rizinusöl mit Alkylenoxiden eingesetzt werden.

4. Verfahren nach Anspruch 1, **dadurch gekennzeichnet, dass** als Komponente bii) Rizinusöl eingesetzt wird.

5. Verfahren nach Anspruch 1, **dadurch gekennzeichnet, dass** die Komponente b) zu 10-25 Gew.-% aus bi), zu 50-80 Gew.-% aus bii) und zu 10-30 Gew.-% aus biii), jeweils bezogen auf die Summe aus bi), bii) und biii), besteht.

6. Verfahren nach Anspruch 1, **dadurch gekennzeichnet, dass** die durch Anlagerung von Alkylenoxiden an Verbindungen aus nachwachsenden Rohstoffen unter Verwendung von DMC-Katalysatoren hergestellten Polyetheralkohole einen Gehalt an zyklischen Fettsäureestern von maximal 10 ppm aufweisen.

7. Verfahren nach Anspruch 1, **dadurch gekennzeichnet**, das als Verbindung biii) Monole und/oder Diole mit einer Hydroxylgruppenzahl von 100 bis 800 mgKOH/g eingesetzt werden

8. Verfahren nach Anspruch 1, **dadurch gekennzeichnet**, das als Polyisocyanat bevorzugt eine Mischung aus 80 Gew.-%. 2,4- und 20 Gew.-% 2,6-Toluylendiisocyanat eingesetzt wird.

9. Verfahren nach Anspruch 1, **dadurch gekennzeichnet**, das als Treibmittel bevorzugt Wasser eingesetzt wird.

10. Verfahren nach Anspruch 1, **dadurch gekennzeichnet, dass** die Luftdurchlässigkeit des viskoelastischen Polyurethan-Blockweichschaumstoffen mindestens 10 dm$^3$/min beträgt.

11. Verfahren nach Anspruch 1, **dadurch gekennzeichnet, dass** der Druckverformungsrest von Polyurethan-Blockweichschaumstoffen maximal 7 % beträgt.

12. Verfahren nach Anspruch 1, **dadurch gekennzeichnet, dass** der Druckverformungsrest von Polyurethan-Blockweichschaumstoffen maximal nach Alterung, gemäß DIN EN ISO 2440, maximal 15 % beträgt.

13. Verfahren nach Anspruch 1, **dadurch gekennzeichnet**, der Anteil von nachwachsenden Rohstoffen mindestens 20 Ges.=%:, bezogen auf den Polyurethan-schaumstoff, beträgt.

14. Offenzelliger viskoelastischer Polyurethan-Blockweichschaumstoffe, herstellbar nach einem der Ansprüche 1 bis 12.

15. Verwendung von Polyurethan-Weichschaumstoffen nach Anspruch 12 in Möbeln und Matratzen und Kissen.

16. Verwendung von Polyurethan-Weichschaumstoffen nach Anspruch 12 in Kraftfahrzeuginnenräumen.

**Claims**

1. A process for producing open-celled viscoelastic flexible polyurethane foams based on renewable raw materials by reacting

    a) polyisocyanates with
    b) a polyol mixture comprising

        bi)compounds having at least two hydrogen atoms which are reactive toward isocyanate groups and an OH number of from 20 to 100 mg KOH/g and
        bii) compounds having at least two hydrogen atoms which are reactive toward isocyanate groups and an OH number of from 100 to 800 mg KOH/g and
        biii)compounds having at least one and not more than two hydrogen atoms which are reactive toward isocyanate groups and an OHN of from 100 to 800 mg KOH/g,

    c) and blowing agents,

    wherein the components bi) and bii) each comprise at least one compound which comprises renewable raw materials or reaction products thereof.

2. The process according to claim 1, wherein the component b) comprises 5-45% by weight of bi), 30-90% by weight of bii) and 5-40% by weight of biii), in each case based on the sum of bi), bii) and biii).

3. The process according to claim 1, wherein reaction products of castor oil with alkylene oxides are used as component bi).

4. The process according to claim 1, wherein castor oil is used as component bii).

5. The process according to claim 1, wherein the component b) comprises 10-25% by weight of bi), 50-80% by weight of bii) and 10-30% by weight of biii), in each case based on the sum of bi), bii) and biii).

6. The process according to claim 1, wherein the polyether alcohols prepared by addition of alkylene oxides onto compounds derived from renewable raw materials using DMC catalysts have a content of cyclic fatty acid esters of not more than 10 ppm.

7. The process according to claim 1, wherein monools and/or diols having a hydroxyl number of from 100 to 800 mg KOH/g are used as compound biii).

8. The process according to claim 1, wherein a mixture of 80% by weight of tolylene 2,4-diisocyanate and 20% by weight of tolylene 2,6-diisocyanate is preferably used as polyisocyanate.

9. The process according to claim 1, wherein water is preferably used as blowing agent.

10. The process according to claim 1, wherein the air permeability of the viscoelastic flexible polyurethane slabstock foams is at least 10 dm$^3$/min.

11. The process according to claim 1, wherein the compression set of flexible polyurethane slabstock foams is not more than 7%.

12. The process according to claim 1, wherein the compression set of flexible polyurethane slabstock foams after aging in accordance with DIN EN ISO 2440 is not more than 15%.

13. The process according to claim 1, wherein the proportion of renewable raw materials is at least 20% by weight, based on the polyurethane foam.

14. An open-celled viscoelastic flexible polyurethane slabstock foam which can be produced according to any of claims 1 to 12.

15. The use of flexible polyurethane foams according to claim 12 in furniture and mattresses and cushions.

16. The use of flexible polyurethane foams according to claim 12 in motor vehicle interiors.

**Revendications**

1. Procédé de fabrication de mousses souples de polyuréthanne viscoélastiques à cellules ouvertes à base de matières premières renouvelables par réaction de

   a) des polyisocyanates avec
   b) un mélange polyol constitué de

      bi) des composés comportant au moins deux atomes d'hydrogène réactifs avec des groupes isocyanates et ayant un indice OH de 20 à 100 mgKOH/g et
      bii) des composés comportant au moins deux atomes d'hydrogène réactifs avec des groupes isocyanates et ayant un indice OH de 100 à 800 mgKOH/g et
      biii) des composés comportant au moins un et au plus deux atomes d'hydrogène réactifs avec des groupes isocyanates et ayant un indice OH de 100 à 800 mgKOH/g

c) et des agents gonflants

**caractérisé en ce que** les composants bi) et bii) contiennent chacun au moins un composé qui contient des matières premières renouvelables ou leurs produits de réaction.

2. Procédé selon la revendication 1, **caractérisé en ce que** le composant b) est constitué de 5 à 45 % en poids de bi), de 30 à 90 % en poids de bii) et de 5 à 40 % en poids de biii), à chaque fois par rapport à la somme de bi), bii) et biii).

3. Procédé selon la revendication 1, **caractérisé en ce que** des produits de réaction d'huile de ricin avec des oxydes d'alkylène sont utilisés en tant que composant bi).

4. Procédé selon la revendication 1, **caractérisé en ce que** de l'huile de ricin est utilisée en tant que composant bii).

5. Procédé selon la revendication 1, **caractérisé en ce que** le composant b) est constitué de 10 à 25 % en poids de bi), de 50 à 80 % en poids de bii) et de 10 à 30 % en poids de biii), à chaque fois par rapport à la somme de bi), bii) et biii).

6. Procédé selon la revendication 1, **caractérisé en ce que** les polyéther-alcools fabriqués par fixation d'oxydes d'alkylène sur des composés à base de matières premières renouvelables avec utilisation de catalyseurs DMC présentent une teneur maximale en esters d'acides gras cycliques de 10 ppm.

7. Procédé selon la revendication 1, **caractérisé en ce que** des monols et/ou des diols ayant un indice de groupes hydroxyles de 100 à 800 mgKOH/g sont utilisés en tant que composé biii).

8. Procédé selon la revendication 1, **caractérisé en ce qu'**un mélange de 80 % en poids de diisocyanate de 2,4-toluylène et 20 % en poids de diisocyanate de 2,6-toluylène est utilisé de préférence en tant que polyisocyanate.

9. Procédé selon la revendication 1, **caractérisé en ce que** de l'eau est utilisée de préférence en tant qu'agent gonflant.

10. Procédé selon la revendication 1, **caractérisé en ce que** la perméabilité à l'air des blocs de mousses souples de polyuréthanne viscoélastiques est d'au moins 10 dm$^3$/min.

11. Procédé selon la revendication 1, **caractérisé en ce que** la compression rémanente des blocs de mousses souples de polyuréthanne est au plus de 7 %.

12. Procédé selon la revendication 1, **caractérisé en ce que** la compression rémanente des blocs de mousses souples de polyuréthanne est au plus de 15 % après vieillissement selon DIN EN ISO 2440.

13. Procédé selon la revendication 1, **caractérisé en ce que** la proportion de matières premières renouvelables est d'au moins 20 % en poids par rapport à la mousse de polyuréthanne.

14. Blocs de mousses souples de polyuréthanne viscoélastiques à cellules ouvertes, pouvant être fabriqués selon l'une quelconque des revendications 1 à 12.

15. Utilisation de mousses souples de polyuréthanne selon la revendication 12 dans des meubles et des matelas et des coussins.

16. Utilisation de mousses souples de polyuréthanne selon la revendication 12 dans des intérieurs de véhicules automobiles.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 0044813 A
- WO 0420497 A
- EP 654302 A
- EP 862947 A
- WO 9916775 A
- WO 0074845 A
- WO 0074843 A
- WO 0074844 A
- DE 10240186
- US 2834748 A
- US 2917480 A
- US 3629308 A

**In der Beschreibung aufgeführte Nicht-Patentliteratur**

- Kunststoff-Handbuch. Carl-Hanser-Verlag, 1966, vol. 7